# EUROPÄISCHE PATENTSCHRIFT

(11) **EP 2 961 719 B1**
(45) Veröffentlichungstag und Bekanntmachung des Hinweises auf die Patenterteilung: **14.12.2016**
(21) Anmeldenummer: 14710801.3
(22) Anmeldetag: 25.02.2014
(51) Int. Cl.: C05G 3/04, C09K 17/04, C09K 17/18, C09K 17/26, C09K 17/40

(54) **BODENGRANULAT ZUR REVERSIBLEN SPEICHERUNG VON WASSER UND VERFAHREN ZU DESSEN HERSTELLUNG**
SOIL GRANULAR MATERIAL FOR REVERSIBLE STORAGE OF WATER AND METHOD FOR PRODUCTION THEREOF
GRANULAT DE SOL POUR EMMAGASINAGE RÉVERSIBLE D'EAU ET PROCÉDÉ DE FABRICATION DE CE GRANULAT

(30) Priorität: 28.02.2013 DE 102013003323
(43) Veröffentlichungstag der Anmeldung: 06.01.2016
(73) Patentinhaber: Fraunhofer Gesellschaft zur Förderung der angewandten Forschung e.V., 80686 München (DE)
(72) Erfinder: SCHMID, Helmut, 72250 Freudenstadt (DE); NARAYANA, Ida-Bagus Kesawa, Bali 80852 (ID); BRAUN, Monika, 81541 München (DE)
(74) Vertreter: Lichti - Patentanwälte Partnerschaft mbB
(86) Internationale Anmeldenummer: PCT/EP2014/000484
(87) Internationale Veröffentlichungsnummer: WO 2014/131504

(56) Entgegenhaltungen:
- EP-A1- 0 046 855
- EP-A1- 0 279 056
- EP-A1- 0 427 704
- EP-A1- 0 475 433
- EP-A1- 0 726 305

## Beschreibung

Die Erfindung betrifft ein poröses Bodengranulat, welches zur reversiblen Speicherung von Wasser geeignet ist und wenigstens einen offenporigen Schaumstoff aus der Gruppe Schaumton auf der Basis natürlicher Tonmineralien enthält. Die Erfindung bezieht sich ferner auf ein Verfahren zur Herstellung eines solchen porösen Bodengranulates, wobei zur Erzeugung von Granulatpartikeln auf der Basis von Schaumton natürliche Tonmineralien gegebenenfalls vorgemischt und extrudiert werden, wonach das Extrudat granuliert und bei erhöhter Temperatur gebrannt wird, um das eingeschlossene Wasser zu verdampfen und das Granulat aufzuschäumen.

Zum wirtschaftlichen Betrieb von Pflanzungen, beispielsweise in Form von Plantagen, stellt die Auswahl nährstoffreicher Ackerböden, welche sich - bezogen auf den Bedarf der jeweils angebauten Pflanzen - in Klimazonen mit geeignetem Temperatur- und Niederschlagsprofil befinden müssen, eine Grundvoraussetzung dar. Da durch die zunehmende menschliche Population einerseits ein steigender Bedarf an Agrarprodukten besteht, welche sowohl zur Produktion von Nahrungsmitteln als auch in zunehmendem Maße zur CO₂-reduzierten Gewinnung von Energie sowie chemischer Rohstoffe eingesetzt werden, andererseits aber geeignete Ackerflächen nur begrenzt zur Verfügung stehen, spielt die Frage nach Erweiterungsmöglichkeiten der zur Verfügung stehenden Anbauflächen eine große Rolle. In der Landwirtschaft wird gegenwärtig versucht, dem Problem dahingehend zu begegnen, indem weniger auf Ertrag gezüchtete Pflanzen verwendet werden, welche Klimaeinschränkungen, wie insbesondere längere Trockenperioden, besser tolerieren. Hierfür müssen allerdings Ertragseinbußen in Kauf genommen werden. In ungünstigen Klimazonen gibt es zwar hinreichend Vorkommen an durchaus sehr nährstoffreichen und somit potenziell für die Landwirtschaft geeigneten Böden, doch treten die Niederschläge dort üblicherweise sehr unregelmäßig auf, so dass der Wasserbedarf der Pflanzen nicht gedeckt werden kann. Der Grund hierfür besteht nicht vornehmlich an einer insgesamt zu geringen Menge an Niederschlag, sondern insbesondere in dessen sehr ungleichmäßigen Verteilung, wobei das Niederschlagswasser schnell versickert und den Pflanzen daher nur in sehr kurzen Zeitintervallen zur Verfügung steht.

Ein weiteres Problem ist in jüngerer Zeit durch die Erhöhung des Meeresspiegels entstanden. Dieses Phänomen führt zu einer zunehmenden Grundwasserversalzung in den Küstenzonen, welche die Landwirtschaft erschweren oder gar unmöglich machen.

Darüber hinaus besteht ein Verbesserungsbedarf zur wirtschaftlichen Nutzung von Düngemitteln und weiteren Wirkstoffen. In diesem Zusammenhang sei darauf hingewiesen, dass bereits in Gebieten mit geeigneter Wasserversorgung, wie in gemäßigten Klimazonen, nur ca. 30% der Wirkstoffe für die Pflanzen bioverfügbar sind, während der Rest im Zuge von Niederschlägen in tiefere Bodenschichten gespült wird, was es sowohl wirtschaftlich als auch aus Umweltgründen, insbesondere hinsichtlich einer zunehmenden Belastung des Grundwassers mit Dünge- und Pflanzenschutzmitteln, möglichst zu vermeiden gilt.

Zur Speicherung von Wasser in Böden ist es bekannt, den Böden Superabsorber, wie beispielsweise solche auf der Basis von Natriumacrylat, zuzusetzen, welche zur Ausbildung von negativen Ladungszentren in der Lage sind und Wasser, vornehmlich unter Ausbildung von Wasserstoffbrückenbindungen, absorbieren. Nachteilig ist einerseits der verhältnismäßig geringe Grad an reversibler Wasserabgabe; andererseits quellen derartige Superabsorber bei der Aufnahme von Wasser oder Feuchtigkeit insbesondere stark auf, was mit einer erheblichen Volumenänderung einhergeht, welche für das Wurzelwerk der zu kultivierenden Pflanzen schädlich ist.

Darüber hinaus sind Pflanzsubstrate bekannt, welche poröse Partikel aus Lava oder Naturstein enthalten. Das Wasserspeichervermögen solcher Substrate ist indes gering und dienen derartige Substrate vornehmlich dem Gegenteil, nämlich einer Auflockerung relativ dichter, lehmiger Böden, um für einen besseren Abfluss von Niederschlagswasser zu sorgen.

Die EP 0 427 704 A1 beschreibt ein poröses Keramikgranulat auf der Basis von Schaumton gemäß dem Oberbegriff des Anspruchs 1 sowie ein hieraus erzeugtes Pflanzsubstrat in Form einer Mischung desselben mit Blumenerde, welches zur reversiblen Speicherung von Wasser in der Lage ist. Darüber hinaus ist eine Abscheidung von retardiert aus den Poren des Granulates freizusetzenden Wirkstoffen vorgesehen. Zur Herstellung eines solchen Granulates ist ein Aufschäumen einer Mischung aus verschiedenen Tonmineralien (Ziegelton) mittels Druckluft und ein anschließendes Brennen sowie eine Trocknung und Zerkleinerung vorgesehen. Dabei können dem Schaumton anorganische Modifizierungsmittel in Form von Natriumdodecylsulfonat und Natriumpolyphosphat zugesetzt werden.

In der EP 0 279 056 A1 geht es um ein ähnliches Pflanzsubstrat auf der Basis von aufgeschäumten Tonen, welches gleichfalls zur reversiblen Speicherung von Wasser sowie gegebenenfalls zur retardierten Freisetzung von dem Granulat zugesetzten Nährstoffen dienen soll. Anlässlich der Herstellung des Granulates durch Brennen von Ziegelton können wiederum die vorerwähnten anorganischen Modifizierungsmittel sowie andere mineralische Additive, insbesondere Kreide oder Dolomit, zugesetzt werden, welche in dem fertigen Granulat Silikate bilden.

Der EP 0 476 433 A1 ist ein künstlich erzeugtes poröses Bodensubstrat zu entnehmen, welches aus thermoplastischen Harzpartikeln mit hieran hitzegebundenen Feinpartikeln gebildet ist. Bei letzteren kann es sich insbesondere um hitzestabile organische sowie anorganische Substanzen handeln, wie unter anderem um einige natürliche Mineralien. Für die Harzpartikel sind Partikel auf Polystyrol und Polyethylen, insbesondere aus Abfällen, vorgesehen. Ferner ist aus der EP 0 726 305 A1 ein flüssigkeitsspeicherndes Agglomerat bekannt, welches mineralische Schaumpartikel, wie unter anderem Blähton, in Verbindung mit einem Polymerisat enthält. Bei letzterem handelt es sich insbesondere um offenporige Polyurethan- und Polystyrolschäume.

Der Erfindung liegt die Aufgabe zugrunde, ein einfaches und kostengünstiges, poröses Bodengranulat der eingangs genannten Art vorzuschlagen, welches zu einer langzeitigen, reversiblen Speicherung von Wasser in der Lage ist und sowohl bei der Aufnahme als auch bei der Abgabe von Wasser insbesondere ein praktisch konstantes Volumen besitzt, um die Wurzeln der kultivierten Pflanzen nicht zu schädigen. Sie ist ferner auf ein Verfahren zur Herstellung eines solchen Bodengranulates gerichtet.

Erfindungsgemäß wird diese Aufgabe bei einem Bodengranulat der eingangs genannten Art dadurch gelöst, dass der Schaumton organisch modifizierte, aminierte Tonmineralien aus der Gruppe der Schichtsilikate und Gerüstsilikate enthält.

In verfahrenstechnischer Hinsicht sieht die Erfindung zur Lösung dieser Aufgabe bei einem Verfahren der eingangs genannten Art zur Herstellung eines solchen porösen Bodengranulates vor, dass zumindest eine Fraktion einiger der zur Erzeugung der Granulatpartikel aus Schaumton eingesetzten natürlichen Tonmineralien aus der Gruppe der Schichtsilikate und Gerüstsilikate organisch modifiziert und aminiert wird, wonach sie gemeinsam mit den Tonmaterialien gegebenenfalls vorgemischt und extrudiert wird.

Das erfindungsgemäße Bodengranulat besitzt eine offenporige Struktur, welche zur reversiblen Speicherung von großen Mengen an Wasser von insbesondere mehr als 30 Mass.-% bezogen auf die Masse des trockenen Granulates genutzt werden kann. Die offenporige Struktur des Granulatmaterials stellt dabei eine reversible, retardierte Freisetzung des Wassers über einen verhältnismäßig langen Zeitraum sicher, wobei die Reversibilität vornehmlich auf dem Prinzip des chemischen Potenzials beruht. Das Bodengranulat kann folglich insbesondere in zur Kultivierung von Nutzpflanzen ungünstigen Klimazonen mit seltenen und tendenziell heftigen Regenfällen eingesetzt werden. Das erfindungsgemäße Bodengranulat ist ferner chemisch weitestgehend inert und folglich über lange Zeit haltbar, wobei es insbesondere bei der Wasseraufnahme und -abgabe sein Volumen nicht ändert, so dass hierdurch bedingte Schädigungen des Wurzelwerks der zu kultivierenden Pflanzen ausgeschlossen werden kann. Dabei enthält das erfindungsgemäße Bodengranulat organisch modifizierte, aminierte Tonmineralien aus der Gruppe der Schicht-und Gerüstsilikate, deren Anteil vorzugsweise bis zu etwa 20 Mass.-%, insbesondere bis zu etwa 10 Mass.-%, bezogen auf die Masse des Schaumtons betragen kann. Durch die organische Modifikation, wie insbesondere der Einführung von Alkylammoniumionen organischer, vorzugsweise primärer oder auch sekundärer, Amine mit vorzugsweise zwischen 1 und 10 Kohlenstoffatomen, lässt sich das natürliche Quellverhalten der eingesetzten Tonmineralien einstellen und lässt sich hierdurch insbesondere eine etwaige Volumenänderung bei Wasseraufnahme bzw. -abgabe auf ein Mindestmaß von praktisch 0 verringern. Ferner können derartige Additive zur weiteren Erhöhung des reversiblen Wasseraufnahmevermögens beitragen.

Zur Erzeugung der Granulatpartikel auf der Basis von Schaumton sieht das erfindungsgemäße Verfahren vor, dass natürliche Tonmineralien gegebenenfalls vorgemischt werden, was beispielsweise mittels geeigneter Mischer oder Kneter geschehen kann. Die gegebenenfalls vorgemischten Tonmineralien werden sodann, beispielsweise mittels herkömmlicher Ein- oder Mehrschneckenextruder, extrudiert und homogenisiert. Das hierdurch erhaltene Extrudat wird sodann, beispielsweise mittels einer dem Extruder nachgeordneten Schneideinrichtung, granuliert und bei erhöhter Temperatur von beispielsweise größer 1000°C, insbesondere größer 1100°C, vorzugsweise größer 1200°C, gebrannt. Hierbei wird das in den Tonmineralien eingeschlossene, als Treibmittel dienende Wasser verdampft, wodurch das Granulat aufgeschäumt wird und die offenporige Struktur auszubilden vermag. Der Trocknungsprozess sollte daher zweckmäßig so lange durchgeführt werden, bis ein möglichst hoher Anteil des eingeschlossenen Wassers verdampft worden ist. Die Erfindung sieht dabei in verfahrenstechnischer Hinsicht vor, dass zumindest eine Fraktion einiger der zur Erzeugung der Granulatpartikel aus Schaumton eingesetzten natürlichen Tonmineralien aus der Gruppe der Schichtsilikate und Gerüstsilikate organisch modifiziert und aminiert wird, wonach sie gemeinsam mit den Tonmaterialien gegebenenfalls vorgemischt und extrudiert wird. Sodann kann das Granulat, wie oben beschrieben, granuliert und bei erhöhter Temperatur gebrannt werden. Die organische Modifizierung bzw. Aminierung kann beispielsweise durch Reaktion der rohen oder vorzerkleinerten Silikatpartikel mit organischen, vorzugsweise primären oder auch sekundären, Aminen mit vorzugsweise zwischen 1 und 10 Kohlenstoffatomen geschehen.

Vertreter bevorzugter organisch modifizierter, aminierter Schichtsilikate (Phyllosilikate) stellen beispielsweise solche aus der Gruppe Talkum bzw. Speckstein (Mg₃Si₄O₁₀(OH)₂), Muskovit bzw. Tonerdeglimmer (KAl₂[(OH,F)₂|AlSi₃O₁₀]), Kaolinit (Al₄[(OH)₈|Si₄O₁₀]) und Montmorillonit (Al_{1,67}Mg_{0,33})[(OH)₂|Si₄O₁₀]) dar, wobei insbesondere letztgenannter durch Reaktion mit den vorgenannten organischen Aminen organisch modifiziert werden kann, indem die Zwischenschicht-Kationen gegen zusätzlich antimikrobiell wirksame quartäre Alkylammonium-Ionen ausgetauscht werden, welche es - wie oben erwähnt - ermöglichen, die Quellfähigkeit einzustellen. Vertreter bevorzugter organisch modifizierter, aminierter Gerüstsilikate (Tektosilikate), welche zur Hydratbildung befähigt sind und Wasser in ihr Kristallgitter einlagern können, umfassen insbesondere Zeolithe, vorzugsweise aus der Gruppe der Kalium-AluminiumSilikate, wie beispielsweise solche auf Basis des Minerals Klinoptilolith (K₆(Sᵢ₃₀Al₆) * 20 H₂O).

Gemäß einer vorteilhaften Weiterbildung des erfindungsgemäßen Bodengranulates kann vorgesehen sein, dass der Schaumton Nanopartikel von Tonmineralien aus der Gruppe der Schichtsilikate und Gerüstsilikate enthält. Der Partikeldurchmesser solcher Nanopartikel beträgt vorzugsweise zwischen etwa 1 nm und etwa 500 nm, vorzugsweise zwischen etwa 1 nm und etwa 100 nm. Der Anteil der genannten nanoskaligen und/oder organisch modifizierten Tonmineralien kann vorzugweise bis zu etwa 20 Mass.-%, insbesondere bis zu etwa 10 Mass.-%, bezogen auf die Masse des Schaumtons betragen. Die Wirkung derartiger Additive besteht darin, dass sie, wie nachfolgend exemplarisch erläutert, zur weiteren Erhöhung des reversiblen Wasseraufnahmevermögens beitragen können, indem sie für eine sehr feine, offenporige Struktur sorgen und zusätzliches Wasser nach Art von Interkalationsverbindungen aufgenommen werden kann.

Zur Herstellung des offenporigen Schaumtons mit den nanoskaligen Schicht- und/oder Gerüstsilikaten sieht das erfindungsgemäße Verfahren in vorteilhafter Ausgestaltung vor, dass zumindest eine Fraktion einiger der zur Erzeugung der Granulatpartikel aus Schaumton eingesetzten natürlichen Tonmineralien aus der Gruppe der Schichtsilikate und Gerüstsilikate zu nanoskaligen Partikeln zerkleinert wird, wonach sie gemeinsam mit den Tonmaterialien gegebenenfalls vorgemischt und extrudiert wird. Sodann kann das Extrudat, wie weiter oben beschrieben, granuliert und bei erhöhter Temperatur gebrannt werden. Die Zerkleinerung der Tonmineralien kann insbesondere mechanisch mittels bekannter, hierfür geeigneter Zerkleinerungseinrichtungen, wie spezieller Mühlen oder dergleichen, geschehen.

In Bezug auf die vorzugsweise eingesetzten Vertreter solcher nano-modifizierter Schichtsilikate und Gerüstsilikate sei auf die obigen Ausführungen zur organischen Modifikation verwiesen.

Darüber hinaus kann es von Vorteil sein, wenn der Schaumton des Bodengranulates Additive aus der Gruppe der Salzhydrate, insbesondere aus der Gruppe der Carbonate, enthält. Vertreter bevorzugter Salzhydrate, welche insbesondere bei moderaten Temperaturen, wie sie bei der Kultivierung von Pflanzen herrschen, eine (Teil)entwässerung zeigen, umfassen Carbonate, vorzugsweise mit zweiwertigen Kationen, wie beispielsweise Magnesium- und/oder Calciumcarbonat, welche ebenfalls, wenn auch nicht notwendigerweise, mit nanoskaligen Abmessungen vorliegen können.

Zur Erzeugung der Granulatpartikel aus Schaumton mit hierin enthaltenen Salzhydraten kann insbesondere vorgesehen sein, dass den eingesetzten natürlichen Tonmineralien Additive aus der Gruppe der Salzhydrate, insbesondere aus der Gruppe der Carbonate, zugesetzt werden, wonach die Mischung wiederum extrudiert werden und das Extrudat schließlich, wie weiter oben beschrieben, granuliert und bei erhöhter Temperatur gebrannt werden kann.

Gemäß einer Weiterbildung des erfindungsgemäßen Bodengranulates kann vorgesehen sein, dass es ferner einen offenporigen Schaumstoff aus der Gruppe geschäumtes Polykondensationsprodukt aus wenigstens einem polykondensierten phenylpropanoiden Alkohol oder aus wenigstens einem polykondensierten Polyhydroxyphenol enthält.

Dementsprechend kann in verfahrenstechnischer Hinsicht zu diesem Zweck vorgesehen sein, dass ferner zur Erzeugung von Partikeln aus einem geschäumten Polykondensationsprodukt wenigstens ein phenylpropanoider Alkohol oder wenigstens ein polykondensiertes Polyhydroxyphenol in Gegenwart wenigstens eines Treibmittels polykondensiert wird, wobei das Treibmittel aktiviert wird, wonach das Polykondensationsprodukt getrocknet und granuliert wird. Zur Erzeugung der Granulatpartikel aus dem geschäumten Polykondensationsprodukt aus polykondensierten phenylpropanoiden Alkoholen oder polykondensierten Polyhydroxyphenolen werden die Edukte folglich in Gegenwart eines geeigneten chemischen oder physikalischen Treibmittels polykondensiert, wobei das Treibmittel aktiviert wird, so dass das entweichende Treibgas für die offenporige Struktur sorgen kann. Sodann kann das Polykondensationsprodukt getrocknet und granuliert werden. Die Polykondensationsreaktion kann unter Zusatz von üblichen Additiven durchgeführt werden, wie beispielsweise Vernetzungsmitteln (z.B. Formaldehyd oder dergleichen), sofern ein erhöhter Vernetzungsgrad des Polykondensationsproduktes erwünscht ist, und/oder weiteren Additiven, insbesondere aus der Gruppe der Netzmittel, Emulgatoren, Zellbildner, Weichmacher und dergleichen.

In Bezug auf das geschäumte Polykondensationsprodukt sieht eine bevorzugte Ausführungsvariante vor, dass der polykondensierte phenylpropanoide Alkohol in Lignin enthaltene Phenylpropanoideinheiten enthält oder gänzlich hieraus gebildet ist, welche als Substituenten des Benzolrings neben einer Propankette insbesondere wenigstens eine funktionale Gruppe aus der Gruppe Hydroxygruppe, Methoxygruppe sowie gegebenenfalls Alkoxy- und Aryloxygruppe enthalten. Die Propanketten zumindest einiger Phenylpropanoideinheiten können ihrerseits anstelle eines oder mehrerer Wasserstoffatome mit Hydroxygruppen, Ketongruppen oder organischen Resten substituiert sein, wie es gleichfalls bei natürlichem Lignin der Fall ist. Das Polykondensationsprodukt ähnelt in seinem Aufbau folglich dem von Lignin, wobei mit "Lignin" im Sinne der vorliegenden Erfindung sowohl Lignin als auch dessen Derivate angesprochen sind. Lignine und dessen Derivate können einen (noch) thermoplastischen bis eher duroplastischen Charakter aufweisen, wobei sie sich im Vergleich mit anderen Naturpolymeren durch eine in der Regel eine vergleichsweise hohe Festigkeit und Steifigkeit sowie Formhaltigkeit auszeichnen. Lignin selbst ist ein hochmolekulares polyphenolisches Makromolekül, das in verholzenden Pflanzen die Räume zwischen den Zellmembranen ausfüllt und zu Holz werden lässt, wobei ein Mischkörper aus druckfestem Lignin und zugfester Cellulose entsteht. Lignin fällt in großen Mengen als Nebenprodukt bei der Zellstoffgewinnung an und ist somit in großen Mengen verfügbar. Hierbei entstehen beim Aufschluss von Holz Ligninsulfonsäuren als Bestandteil der Sulfitablaugen, in welchen die Ligninsulfonsäuren als Phenolate ("Alkalilignin") gelöst sind. Durch Behandlung mit Schwefelsäure und Kohlendioxid kann die
Ligninsäure ausgefällt werden.

In verfahrenstechnischer Hinsicht wird bei einer solchen Ausführungsvariante folglich zur Erzeugung des Polykondensationsproduktes wenigstens ein phenylpropanoider Alkohol eingesetzt, welcher in Lignin enthaltene Phenylpropanoideinheiten enthält oder gänzlich hieraus gebildet ist, welche als Substituenten des Benzolrings neben einer Propankette insbesondere wenigstens eine funktionale Gruppe aus der Gruppe Hydroxygruppe, Methoxygruppe, Alkoxygruppe und Aryloxygruppe enthalten und/oder in deren Propanketten eines oder mehrere Wasserstoffatome in der vorstehend beschriebenen Weise substituiert sind. Die phenylpropanoiden Alkohole können zweckmäßig zwischen 1 und 50 solcher Phenylpropanoideinheiten, insbesondere zwischen 2 und 40 solcher Phenylpropanoideinheiten, vorzugsweise zwischen 3 und 30 solcher Phenylpropanoideinheiten, beispielsweise zwischen 4 und 20 solcher Phenylpropanoideinheiten, enthalten, wobei Phenylgruppen der Phenylpropanoideinheiten mit den Propanoidketten anderer Phenylpropanoideinheiten direkt und/oder über Sauerstoffgruppen (-0-) kovalent aneinander gebunden sind, wie dies auch bei Lignin der Fall ist.

In vorteilhafter Ausgestaltung kann bei dieser Ausführungsvariante vorgesehen sein, dass das geschäumte Polykondensationsprodukt ein Co-Polykondensat aus polykondensierten phenylpropanoiden Alkoholen mit Lignin ist. Die Herstellung eines solchen Co-Polykondensates kann vorzugsweise dadurch geschehen, indem zur Erzeugung des geschäumten Polykondensationsproduktes der phenylpropanoide Alkohol mit Lignin co-polykondensiert wird, wobei das Lignin zweckmäßigerweise in Pulverform zugesetzt wird, beispielsweise in einem Anteil zwischen etwa 1 und etwa 300 Mass.-%, vorzugsweise zwischen etwa 2 und etwa 200 Mass.-%, bezogen auf den Anteil an phenylpropanoiden Alkoholen.

In Bezug auf das geschäumte Polykondensationsprodukt sieht eine weitere bevorzugte Ausführungsvariante vor, dass es sich bei dem polykondensierten Polyhydroxyphenol um polykondensiertes Tannin handelt. Tannine sind pflanzliche Gerbstoffe, welche aus verschiedenen Pflanzen gewonnen werden können, wie beispielsweise aus dem Holz und der Rinde von Eichen, Birken und Kastanien, aus den Fruchthüllen von Walnüssen sowie aus den Teilen weiterer, vornehmlich in den Tropen und Subtropen beheimateten Pflanzen.

In verfahrenstechnischer Hinsicht wird bei einer solchen Ausführungsvariante folglich zur Erzeugung des Polykondensationsproduktes wenigstens ein Tannin eingesetzt, welches wiederum in Gegenwart eines geeigneten Treibmittels polykondensiert wird.

Sofern das erfindungsgemäße Bodengranulat ein solches geschäumtes Polykondensationsprodukt enthält, kann gemäß einer vorteilhaften Weiterbildung vorgesehen sein, dass das geschäumte Polykondensationsprodukt sulfoniert und/oder a-miniert ist. Dies gibt die Möglichkeit, dem Bodengranulat insbesondere die Eigenschaften eines Ionenabsorbers oder Ionenaustauschers zu verleihen, wodurch zusätzlich zu einer langfristigen, reversiblen Wasserspeicherung der mit einer Bodenversalzung einhergehenden Problematik begegnet werden kann, wie sie beispielsweise in küstennahen Anbaugebieten häufig zu beobachten ist. So kann ein erfindungsgemäßes Bodengranulat nach einer Sulfonierung des Polykondensationsproduktes beispielsweise als protonen- bzw. H⁺-beladener Kationen-Austauscher eingesetzt werden, während ein aminiertes Bodengranulat als OH⁻-beladener Anionenaustauscher eingesetzt werden kann.

In verfahrenstechnischer Hinsicht ist in diesem Fall vorgesehen, dass das geschäumte Polykondensationsprodukt sulfoniert und/oder aminiert wird. Die Sulfonierung kann dabei in an sich bekannter Weise erfolgen, indem beispielsweise an die Phenylgruppen des geschäumten Polykondensationsproduktes durch elektrophile aromatische Substitutionsreaktion mit Schwefeltrioxid, Pyridin oder dergleichen -SO₃H-Gruppen eingeführt werden, und/oder an die Propanoidgruppen des geschäumten Polykondensationsproduktes werden durch radikalische Substitutionsreaktion im Rahmen einer Sulfochlorierung Sulfonylchloridgruppen eingeführt, welche durch Hydrolyse zu Sulfonsäuregruppen umgesetzt werden können. Entsprechendes gilt für die Aminierung, welche beispielsweise durch nukleophile Substitution von in dem Polykondensationsprodukt enthaltenen Sauerstoffatomen durch Aminoverbindungen vonstatten gehen kann, indem das Polykondensationprodukt mit Ammoniak oder Aminen umgesetzt wird.

Gemäß einer weitere vorteilhaften Weiterbildung des erfindungsgemäßen Bodengranulates kann vorgesehen sein, dass in seinen Poren Wirkstoffe, insbesondere aus der Gruppe Dünger, Pflanzenschutzmittel und Puffer, abgeschieden sind. Auf diese Weise ist es möglich, das Bodengranulat zusätzlich zu der reversiblen Wasserspeicherung über einen langen Zeitraum hinweg als Trägermatrix für beispielsweise Düngemittel- und Pflanzenschutzmittel zu verwenden, wobei das offenporige System des Schaumtons und gegebenenfalls des geschäumten Polykondensationsproduktes als Wirkstoffspeicher mit retardierter Freisetzung der Wirkstoffe dient, so dass ein definiertes Austragsprofil eingestellt werden kann und die Wirkstoffe im Niederschlagsfall nicht zu hohen Anteilen spontan ausgewaschen werden und versickern. Die dadurch erreichbare Reduktion der Wirkstoffmenge führt direkt zu einer Kostensenkung und Umweltentlastung. Um einer etwaigen Übersäuerung der Anbauflächen entgegenzutreten, können in den Poren des Bodengranulates insbesondere auch Puffer, wie beispielsweise Calciumcarbonat (CaCO₃), abgeschieden sein, welches ebenso wie die vorgenannten Wirkstoffe über einen verhältnismäßig langen Zeitraum hinweg abgegeben kann, sobald das offenporige System Wasser aufgenommen und dieses mit den gelösten Wirkstoffen/Puffern wieder abgegeben hat.

Um derartige Wirkstoffe einschließlich Puffer in die Poren des Bodengranulates einzubringen, kann das Bodengranulat insbesondere in eine Lösung des oder der jeweiligen Wirkstoffe(s) getaucht und anschließend getrocknet werden, um das Lösungsmittel, z.B. Wasser, zu entfernen.

Wie bereits angedeutet, kann in dem erfindungsgemäßen Bodengranulat insbesondere, wenn auch nicht notwendigerweise, der Schaumton mit einem geschäumten Polykondensationsprodukt der vorgenannten Art kombiniert sein, wobei es vorzugsweise eine offenporige Matrix aus dem geschäumten Polykondensationsprodukt aus wenigstens einem polykondensierten phenylpropanoiden Alkohol oder aus wenigstens einem polykondensierten Polyhydroxyphenol mit hierin eingebetteten Partikeln aus dem Schaumton aufweist.

Zur Erzeugung eines derartigen Bodengranulates mit einer offenporigen Matrix aus dem geschäumten Polykondensationsprodukt mit hierein eingebetteten Partikeln aus Schaumton kann vorgesehen sein, dass die Schaumtonpartikeln, beispielsweise in der oben beschriebenen Weise, vorgefertigt und dem wenigstens einen phenylpropanoiden Alkohol oder dem wenigstens einen polykondensierten Polyhydroxyphenol vor dessen Polykondensation zugesetzt werden.

Nachstehend ist die Erfindung anhand eines Ausführungsbeispiels unter Bezugnahme auf die Zeichnungen näher erläutert. Dabei zeigen:
- Fig. 1: die Strukturformel eines zur Polykondensation eingesetzten phenylpropanoiden Alkohols, welcher in natürlichem Lignin enthaltene Phenylpropanoideinheiten enthält;
- Fig. 2: eine mikroskopische Aufnahme eines offenporigen Schaumtongranulates; und
- Fig. 3: eine mikroskopische Aufnahme der Schnittfläche eines offenporigen Bodengranulates mit einer Matrix aus einem aus dem phenylpropanoiden Alkohol gemäß Fig. 1 in Gegenwart von Lignin co-polykondensierten Polykondensationsprodukt, wobei in die Matrix Partikel aus Schaumton gemäß Fig. 2 eingebettet sind.

### Ausführungsbeispiel:

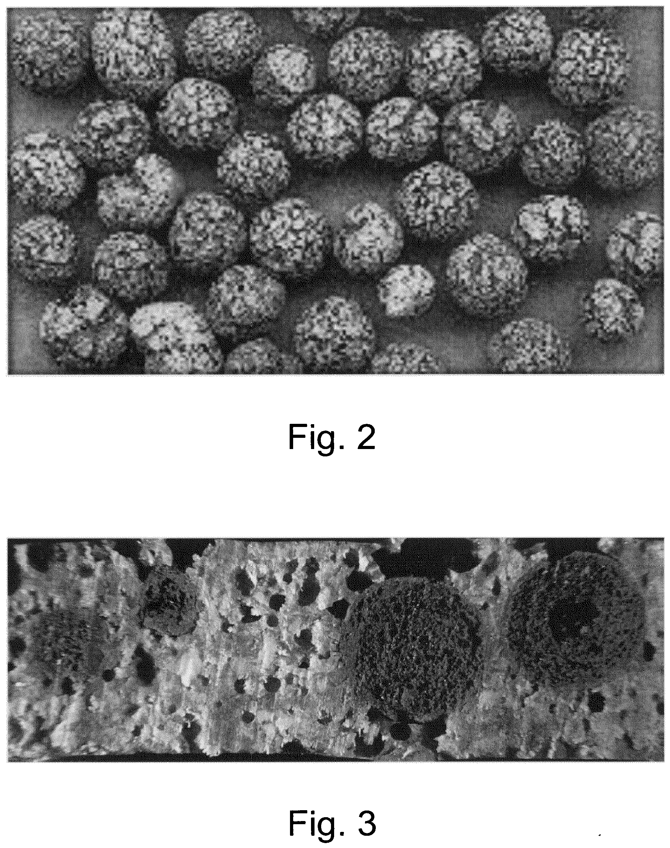

Zur Herstellung des Schaumtonanteils einer Ausführungsform eines erfindungsgemäßen Bodengranulates wurden natürliche Tonmineralien mit etwa 10 Mass.-% einer mechanisch vorzerkleinerten Fraktion der aminierten Tonmineralien mit einer Partikelgröße zwischen etwa 1 nm und etwa 100 nm in einem geeigneten Mischer oder Kneter vorgemischt. Sodann wurde die Mischung mittels eines Zweischneckenextruders extrudiert und homogenisiert. Das hierdurch erhaltene Extrudat wurde sodann mittels eines dem Extruder nachgeordneten Granulators granuliert und bei einer Temperatur von etwa 1250°C über 45 min in einem Drehrohrofen gebrannt, um das in den Tonmineralien eingeschlossene Wasser im Wesentlichen vollständig zu verdampfen und für eine sehr feine, offenporige Struktur zu sorgen. Eine mikroskopische Aufnahme der Schaumton-Granulatpartikel ist der mikroskopischen Aufnahme gemäß Fig. 2 zu entnehmen.

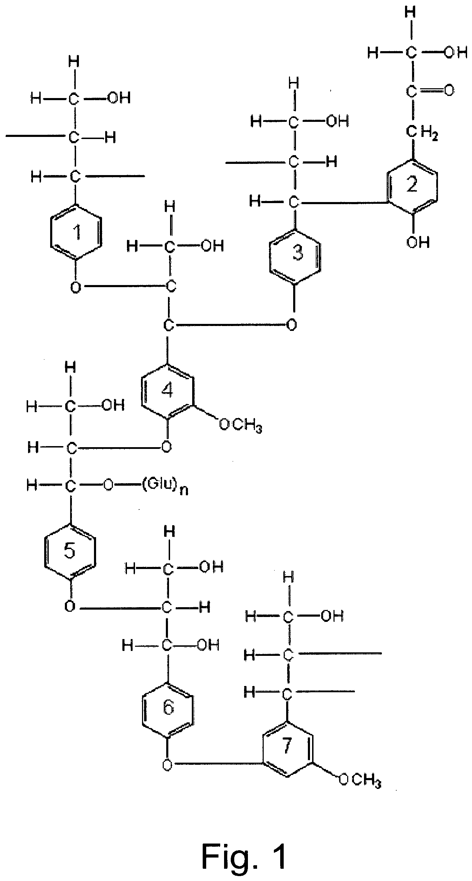

Zur Herstellung einer die Schaumton-Granulatpartikel gemäß Fig. 2 aufnehmenden, offenporigen Trägermatrix der Ausführungsform eines erfindungsgemäßen Bodengranulates werden 100 g eines als Prepolymer für eine Polykondensationsreaktion dienenden, kommerziell erhältlichen, flüssig-viskosen, phenylpropanoiden Alkohols mit der in Fig. 1 dargestellten Strukturformel, welcher insgesamt 7 in natürlich vorkommendem Lignin enthaltene Phenylpropanoideinheiten enthält und insoweit einem "Fragment" natürlichen Lignins entspricht, bei Raumtemperatur unter ständigem Rühren mit 1000 U/min sukzessive mit pulverförmigem Lignin vermischt, bis ein Massenverhältnis des phenylpropanoiden Alkohols zu Lignin von beispielsweise etwa 0,5 zu 1 bis etwa 1 zu 0,5 erreicht worden ist. Der Mischung wurden 6,2 g eines Netzmittels, 1 g eines Emulgators, 2,3 g einer Vormischung aus 50 Mass.-% eines Emulgators mit 50 Mass.-% des phenylpropanoiden Alkohols gemäß Fig. 1 sowie 0,9 g eines Weichmachers auf der Basis von Propylenglykol unter fortwährendem Rühren zugesetzt. Sodann wurden unter fortwährendem Rühren 8 g eines als Gasgenerator dienenden Treibmittels in Form von Petrolether sowie 12 g eines Härters, beispielsweise auf Formaldehydbasis, zugesetzt, woraufhin schließlich die vorgefertigten Schaumtonpartikel zugegeben und in der viskosen Reaktionsmischung homogenisiert und in Schwebe gehalten worden sind. Diese Reaktionsmischung wurde nach weiterem Rühren in eine auf etwa 70°C vorgeheizte Form ausgegossen und insgesamt etwa 3 h ausgehärtet und getrocknet. Nach etwa einstündiger Kühlzeit wurde das feste Polykondensationsprodukt auf der Basis des mit Lignin co-polykondensierten phenylpropanoiden Alkohols entformt und zu dem offenporigen Bodengranulat granuliert.

Fig. 3 zeigt eine mikroskopisch Aufnahme einer Schnittansicht durch das poröse Bodengranulat, in welcher einerseits (dunkle, insgesamt 4) offenporige Schaumtonpartikel ersichtlich sind, welche in die gleichfalls offenporige Matrix des Co-Polykondensationsproduktes eingebettet sind.

Das fertige Bodengranulat gemäß Fig. 3 kann schließlich in Wirkstoff-/Pufferlösungen getaucht und anschließend getrocknet werden, um die Wirkstoffe bzw. Puffer über einen langen Zeitraum hinweg retardiert freisetzen zu können, so dass die Wirkstoffe von den zu kultivierenden Pflanzen aufgenommen werden können und nicht infolge Versickerung verlustig gehen.

Das Bodengranulat kann schließlich anteilig auf die zu kultivierenden Böden aufgebracht bzw. in diese eingearbeitet, beispielsweise eingepflügt, werden.

## Patentansprüche

1. Poröses Bodengranulat, welches zur reversiblen Speicherung von Wasser geeignet ist und wenigstens einen offenporigen Schaumstoff aus der Gruppe Schaumton auf der Basis natürlicher Tonmineralien enthält, **dadurch gekennzeichnet, dass** der Schaumton organisch modifizierte, aminierte Tonmineralien aus der Gruppe der Schichtsilikate und Gerüstsilikate enthält.

2. Bodengranulat nach Anspruch 1, **dadurch gekennzeichnet, dass** zur organischen Modifikation des Schaumtons Alkylammoniumionen von organischen Aminen eingeführt worden sind, wobei die Alkylammoniumionen der organischen Amine insbesondere von
- organischen primären oder sekundären Aminen; und/oder
- organischen Aminen mit zwischen 1 und 10 Kohlenstoffatomen
eingeführt worden sind.

3. Bodengranulat nach Anspruch 1 oder 2, **dadurch gekennzeichnet, dass** die organisch modifizierten, aminierten Schicht- und/oder Gerüstsilikate aus der Gruppe Speckstein (Mg₃Si₄O₁₀(OH)₂), Muskovit (KAl₂[(OH,F)₂|AlSi₃O₁₀]), Kaolinit (Al₄[(OH)₈|Si₄O₁₀]), Montmorillonit (Al_{1,67}Mg_{0,33}) [(OH)₂|Si₄O₁₀]) und Kalium-Aluminium-Silikaten, wie K₆(Si₃₀Al₆) * 20 H₂O, gewählt sind.

4. Bodengranulat nach einem der Ansprüche 1 bis 3, **dadurch gekennzeichnet, dass** der Schaumton Nanopartikel von Tonmineralien aus der Gruppe der Schichtsilikate und Gerüstsilikate, insbesondere aus der Gruppe Speckstein (Mg₃Si₄O₁₀(OH)₂), Muskovit (KAl₂[(OH, F)₂|AlSi₃O₁₀]), Kaolinit (Al₄[(OH)₈|Si₄O₁₀]), Montmorillonit (Al_{1,67}Mg_{0,33}) [(OH)₂|Si₄O₁₀]) und Kalium-Aluminium-Silikaten, wie K₆(Si₃₀Al₆) * 20 H₂O, enthält.

5. Bodengranulat nach einem der Ansprüche 1 bis 4, **dadurch gekennzeichnet, dass** der Schaumton Additive aus der Gruppe der Salzhydrate, insbesondere aus der Gruppe der Carbonate, enthält.

6. Bodengranulat nach einem der Ansprüche 1 bis 5, **dadurch gekennzeichnet, dass** es ferner einen offenporigen Schaumstoff aus der Gruppe geschäumtes Polykondensationsprodukt aus wenigstens einem polykondensierten phenylpropanoiden Alkohol oder aus wenigstens einem polykondensierten Polyhydroxyphenol enthält, wobei insbesondere
- der polykondensierte phenylpropanoide Alkohol in Lignin enthaltene Phenylpropanoideinheiten enthält oder gänzlich hieraus gebildet ist, welche als Substituenten des Benzolrings neben einer Propankette insbesondere wenigstens eine funktionale Gruppe aus der Gruppe Hydroxygruppe, Methoxygruppe, Alkoxygruppe und Aryloxygruppe enthalten;
- das geschäumte Polykondensationsprodukt ein Co-Polykondensat aus polykondensierten phenylpropanoiden Alkoholen mit Lignin ist; und/oder
- es sich bei dem polykondensierten Polyhydroxyphenol um polykondensiertes Tannin handelt.

7. Bodengranulat nach Anspruch 6, **dadurch gekennzeichnet, dass** das geschäumte Polykondensationsprodukt sulfoniert und/oder aminiert ist.

8. Bodengranulat nach einem der Ansprüche 6 oder 7, **dadurch gekennzeichnet, dass** es eine offenporige Matrix aus dem geschäumten Polykondensationsprodukt aus wenigstens einem polykondensierten phenylpropanoiden Alkohol oder aus wenigstens einem polykondensierten Polyhydroxyphenol mit hierin eingebetteten Partikeln aus dem Schaumton aufweist.

9. Bodengranulat nach einem der Ansprüche 1 bis 8, **dadurch gekennzeichnet, dass** in seinen Poren Wirkstoffe, insbesondere aus der Gruppe Dünger, Pflanzenschutzmittel und Puffer, abgeschieden sind.

10. Verfahren zur Herstellung eines porösen Bodengranulates nach einem der vorangehenden Ansprüche, welches zur reversiblen Speicherung von Wasser geeignet ist, wobei zur Erzeugung von Granulatpartikeln auf der Basis von Schaumton natürliche Tonmineralien gegebenenfalls vorgemischt und extrudiert werden, wonach das Extrudat granuliert und bei erhöhter Temperatur gebrannt wird, um das eingeschlossene Wasser zu verdampfen und das Granulat aufzuschäumen, **dadurch gekennzeichnet, dass** zumindest eine Fraktion einiger der zur Erzeugung der Granulatpartikel aus Schaumton eingesetzten natürlichen Tonmineralien aus der Gruppe der Schichtsilikate und Gerüstsilikate organisch modifiziert und aminiert wird, wonach sie gemeinsam mit den Tonmaterialien gegebenenfalls vorgemischt und extrudiert wird.

11. Verfahren nach Anspruch 10, **dadurch gekennzeichnet, dass** zur organischen Modifikation der Tonmineralien Alkylammoniumionen von organischen Aminen eingeführt werden, wobei insbesondere Alkylammoniumionen von
- organischen primären oder sekundären Aminen; und/oder
- organischen Aminen mit zwischen 1 und 10 Kohlenstoffatomen
eingeführt werden.

12. Verfahren nach Anspruch 10 oder 11, **dadurch gekennzeichnet, dass** die Schichtsilikate und/oder Gerüstsilikate aus der Gruppe Speckstein (Mg₃Si₄O₁₀(OH)₂), Muskovit (KAl₂[(OH,F)₂|AlSi₃O₁₀]), Kaolinit (Al₄[(OH)₈|Si₄O₁₀]), Montmorillonit (Al_{1,67}Mg_{0,33}) [(OH)₂|Si₄O₁₀]) und Kalium-Aluminium-Silikaten, wie K₆(Si₃₀Al₆) * 20 H₂O, organisch modifiziert und aminiert werden, wobei insbesondere zumindest eine Fraktion einiger dieser zur Erzeugung der Granulatpartikel aus Schaumton eingesetzten natürlichen Tonmineralien aus der Gruppe der Schichtsilikate und Gerüstsilikate zu nanoskaligen Partikeln zerkleinert wird, wonach sie gemeinsam mit den Tonmaterialien gegebenenfalls vorgemischt und extrudiert wird.

13. Verfahren nach einem der Ansprüche 10 bis 12, **dadurch gekennzeichnet, dass** den zur Erzeugung der Granulatpartikel aus Schaumton eingesetzten natürlichen Tonmineralien Additive aus der Gruppe der Salzhydrate, insbesondere aus der Gruppe der Carbonate, zugesetzt werden.

14. Verfahren nach einem der Ansprüche 10 bis 13, **dadurch gekennzeichnet, dass** ferner zur Erzeugung von Partikeln aus einem geschäumten Polykondensationsprodukt wenigstens ein phenylpropanoider Alkohol oder wenigstens ein polykondensiertes Polyhydroxyphenol in Gegenwart wenigstens eines Treibmittels polykondensiert wird, wobei das Treibmittel aktiviert wird, wonach das Polykondensationsprodukt getrocknet und granuliert wird, wobei insbesondere
- zur Erzeugung des Polykondensationsproduktes wenigstens ein phenylpropanoider Alkohol eingesetzt wird, welcher in Lignin enthaltene Phenylpropanoideinheiten enthält oder gänzlich hieraus gebildet ist, welche als Substituenten des Benzolrings neben einer Propankette insbesondere wenigstens eine funktionale Gruppe aus der Gruppe Hydroxygruppe, Methoxygruppe, Alkoxygruppe und Aryloxygruppe enthalten;
- zur Erzeugung des geschäumten Polykondensationsproduktes der phenylpropanoide Alkohol mit Lignin co-polykondensiert wird; und/oder
- zur Erzeugung des Polykondensationsproduktes wenigstens ein Tannin eingesetzt wird.

15. Verfahren nach einem der Ansprüche 10 bis 14, **dadurch gekennzeichnet, dass** zur Erzeugung einer offenporigen Matrix aus dem geschäumten Polykondensationsprodukt mit hierein eingebetteten Partikeln aus Schaumton die Schaumtonpartikeln vorgefertigt und dem wenigstens einen phenylpropanoiden Alkohol oder dem wenigstens einen polykondensierten Polyhydroxyphenol vor dessen Polykondensation zugesetzt werden.

16. Verfahren nach einem der Ansprüche 10 bis 15, **dadurch gekennzeichnet, dass** in die Poren des Bodengranulates Wirkstoffe, insbesondere aus der Gruppe Dünger, Pflanzenschutzmittel und Puffer, eingebracht werden, indem das Bodengranulat in eine Lösung des Wirkstoffes getaucht und anschließend getrocknet wird.

## Claims

1. Porous soil granules suitable for the reversible storage of water and comprising at least one open-pore foam from the group consisting of foamed clay based on natural clay minerals, **characterized in that** the foamed clay comprises organically modified, aminated clay minerals from the group consisting of the sheet silicates and framework silicates.

2. The soil granules as claimed in claim 1, **characterized in that** organic modification of the foamed clay has been accomplished by introducing alkylammonium ions of organic, amines, wherein, in particular, alkylammonium ions of organic amines of
- organic primary or secondary amines; and/or
- organic amines having from 1 to 10 carbon atoms have been introduced.

3. The soil granules as claimed in claim 1 or 2, **characterized in that** the organically modified, aminated sheet and/or framework silicates are selected from the group consisting of soapstone (Mg₃Si₄O₁₀(OH)₂), muscovite (KAl₂[(OH,F)₂|AlSi₃O₁₀]), kaolinite (Al₄[(OH)₈|Si₄O₁₀]), montmorillonite (Al_{1.67}Mg_{0.33})[(OH)₂|Si₄O₁₀]) and potassium aluminum silicates, such as K₆(Si₃₀Al₆) * 20 H₂O.

4. The soil granules as claimed in any of claims 1 to 3, **characterized in that** the foamed clay comprises nanoparticles of clay minerals from the group consisting of the sheet silicates and framework silicates, in particular from the group consisting of soapstone (Mg₃Si₄O₁₀(OH)₂), muscovite (KAl₂[(OH,F)₂|AlSi₃O₁₀]), kaolinite
(Al₄[(OH)₈|Si₄O₁₀]), montmorillonite
(Al_{1.67}Mg_{0.33})[(OH)₂|Si₄O₁₀]) and potassium aluminum silicates, such as K₆(Si₃₀Al₆) * 20 H₂O.

5. The soil granules as claimed in any of claims 1 to 4, **characterized in that** the foamed clay comprises additives from the group of the salt hydrates, in particular from the group of the carbonates.

6. The soil granules as claimed in any of claims 1 to 5, **characterized in that** they also comprise an open-pore foam from the group consisting of foamed polycondensation product comprising at least one polycondensed phenylpropanoid alcohol or comprising at least one polycondensed Polyhydroxyphenol, wherein, in particular,
- the polycondensed phenylpropanoid alcohol comprises or is formed entirely of phenylpropanoid units which are present in lignin and which comprise, as substituents of the benzene ring, in addition to a propane chain, in particular at least one functional group from the group consisting of hydroxyl group, methoxy group, alkoxy group and aryloxy group;
- the foamed polycondensation product is a co-polycondensate of polycondensed phenylpropanoid alcohols with lignin; and/or
- the polycondensed polyhydroxyphenol is polycondensed tannin.

7. The soil granules as claimed in claim 6, **characterized in that** the foamed polycondensation product is sulfonated and/or aminated.

8. The soil granules as claimed in claim 6 or 7, **characterized in that** they have an open-pore matrix comprising the foamed polycondensation product of at least one polycondensed phenylpropanoid alcohol or of at least one polycondensed polyhydroxyphenol with particles of the foamed clay embedded therein.

9. The soil granules as claimed in any of claims 1 to 8, characterizes in that they have, deposited in their pores, active ingredients, in particular from the group consisting of fertilizers, plant protection agents and buffers.

10. A method for producing porous soil granules as claimed in any of the preceding claims which are suitable for the reversible storage of water, wherein, in order to produce granular particles based on foamed clay, natural clay minerals are optionally premixed and extruded, after which the extrudate is granulated and fired at elevated temperature in order to evaporate the included water and cause foaming of the granules, **characterized in that** at least one fraction of some of the natural clay minerals from the group of the sheet silicates and framework silicates, used to produce the granular particles from foamed clay, is organically modified and aminated, after which it is optionally premixed and extruded together with the clay materials.

11. The method as claimed in claim 10, **characterized in that**, in order to organically modify the clay minerals, alkylammonium ions of organic amines are introduced, wherein, in particular, alkylammonium ions of
- organic primary or secondary amines; and/or
- organic amines having from 1 to 10 carbon atoms are introduced.

12. The method as claimed in claim 10 or 11, **characterized in that** the sheet silicates and/or framework silicates from the group consisting of soapstone (Mg₃Si₄O₁₀(OH)₂), muscovite (KAl₂[(OH,F)₂|AlSi₃O₁₀]), kaolinite (Al₄[(OH)₈|Si₄O₁₀]), montmorillonite (Al_{1.67}Mg_{0.33})[(OH)₂|Si₄O₁₀]) and potassium aluminum silicates, such as K₆(Si₃₀Al₆) * 20 H₂O are organically modified and aminated, wherein, in particular, at least one fraction of some of the natural clay minerals from the group of the sheet silicates and framework silicates, used to produce the granular particles from foamed clay, is comminuted to give nanoscale particles, after which it is optionally premixed and extruded together with the clay materials.

13. The method as claimed in any of claims 10 to 12, **characterized in that** the natural clay minerals used to produce the granular particles comprising foamed clay are admixed with additives from the group of the salt hydrates, in particular from the group of the carbonates.

14. The method as claimed in any of claims 10 to 13, **characterized in that**, in order to produce particles comprising a foamed polycondensation product, also at least one phenylpropanoid alcohol or at least one polycondensed polyhydroxyphenol is polycondensed in the presence of at least one blowing agent, with the blowing agent being activated, after which the polycondensation product is dried and granulated, wherein, in particular,
- the polycondensation product is produced using at least one phenylpropanoid alcohol which comprises or is formed entirely of phenylpropanoid units which are present in lignin and which comprise, as substituents of the benzene ring, in addition to a propane chain, in particular at least one functional group from the group consisting of hydroxyl group, methoxy group, alkoxy group and aryloxy group;
- the foamed polycondensation product is produced by co-polycondensing the phenylpropanoid alcohol with lignin; and/or
- the polycondensation product is produced using at least one tannin.

15. The method as claimed in any of claims 10 to 14, **characterized in that**, in order to produce an open-pore matrix comprising the foamed polycondensation product with foamed clay particles embedded therein, the foamed clay particles are prefabricating and are added to the at least one phenylpropanoid alcohol or to the at least one polycondensed polyhydroxyphenol prior to its polycondensation.

16. The method as claimed in any of claims 10 to 15, **characterized in that** active ingredients, in particular from the group consisting of fertilizers, plant protection agents and buffers, are introduced into the pores of the soil granules, by immersing the soil granules into a solution of the active ingredient and then drying them.

## Revendications

1. Granulat de sol poreux adapté à l'accumulation réversible d'eau et contenant au moins une mousse à pores ouverts appartenant au groupe comprenant la mousse d'argile à base de minéraux argileux naturels, **caractérisé en ce que** la mousse d'argile contient des minéraux argileux aminés modifiés de façon organique appartenant au groupe des phyllosilicates et des tectosilicates.

2. Granulat de sol selon la revendication 1, **caractérisé en ce que** la modification organique de la mousse d'argile s'effectue en introduisant des ions d'alkylammonium d'amines organiques, les ions d'alkylammonium des amines organiques provenant notamment :
- d'amines primaires ou secondaires organiques ; et/ou
- d'amines organiques avec entre 1 et 10 atomes de carbone.

3. Granulat de sol selon la revendication 1 ou 2, **caractérisé en ce que** les phyllosilicates et/ou tectosilicates aminés modifiés de façon organique sont sélectionnés dans le groupe comprenant la stéatite (Mg₃Si₄O₁₀(OH)₂), la muscovite (KAl₂[(OH,F)₂|AlSi₃O₁₀]), la kaolinite (Al₄[(OH)₈|Si₄O₁₀]), la montmorillonite (Al_{1,67}Mg_{0,33}) [(OH)₂|Si₄O₁₀]) et les silicates de potassium-aluminium, tels que K₆(Sᵢ₃₀Al₆) * 20 H₂O.

4. Granulat de sol selon l'une quelconque des revendications 1 à 3, **caractérisé en ce que** la mousse d'argile contient des nanoparticules de minéraux argileux appartenant au groupe des phyllosilicates et des tectosilicates, notamment au groupe comprenant la stéatite (Mg₃Si₄O₁₀(OH)₂), la muscovite (KAl₂[(OH,F)₂|AlSi₃O₁₀]), la kaolinite (Al₄[(OH)₈|Si₄O₁₀]), la montmorillonite (Al_{1,67}Mg_{0,33}) [(OH)₂|Si₄O₁₀]) et les silicates de potassium-aluminium, tels que K₆(Si₃₀Al₆) * 20 H₂O.

5. Granulat de sol selon l'une quelconque des revendications 1 à 4, **caractérisé en ce que** la mousse d'argile contient des additifs appartenant au groupe des hydrates salins, notamment au groupe des carbonates.

6. Granulat de sol selon l'une quelconque des revendications 1 à 5, **caractérisé en ce qu'**il contient en outre une mousse à pores ouverts appartenant au groupe du produit de polycondensation expansé réalisé à partir d'au moins un alcool phénylpropanoïde polycondensé ou d'au moins un polyhydroxyphénol polycondensé, notamment :
- l'alcool phénylpropanoïde polycondensé contenant des unités phénylpropanoïdes contenant de la lignine ou étant entièrement formé à partir de celle-ci, ces unités contenant comme substituts du cycle benzénique, outre une chaîne propanique, notamment au moins un groupe fonctionnel appartenant au groupe contenant le groupe hydroxyle, le groupe méthoxyle, le groupe alkoxyle et le groupe aryloxyle ;
- le produit de polycondensation expansé étant un copolycondensat réalisé à partir d'alcools phénylpropanoïdes polycondensés avec de la lignine ; et/ou
- le polyhydroxyphénol polycondensé étant un tanin polycondensé.

7. Granulat de sol selon la revendication 6, **caractérisé en ce que** le produit de polycondensation expansé est sulfoné et/ou aminé.

8. Granulat de sol selon l'une quelconque des revendications 6 ou 7, **caractérisé en ce qu'**il contient une matrice à pores ouverts réalisée à partir du produit de polycondensation expansé réalisé à partir d'au moins un alcool phénylpropanoïde polycondensé ou d'au moins un polyhydroxyphénol polycondensé avec des particules de mousse d'argile logées à l'intérieur.

9. Granulat de sol selon l'une quelconque des revendications 1 à 8, **caractérisé en ce que** les substances actives, appartenant notamment au groupe des engrais, des moyens phytosanitaires et des tampons, sont isolées dans ses pores.

10. Procédé de fabrication d'un granulat de sol poreux selon l'une quelconque des revendications précédentes, adapté à l'accumulation réversible d'eau, des minéraux argileux naturels à base de mousse d'argile étant le cas échéant prémélangés et extrudés pour produire des particules de granulat, après quoi l'extrudat est granulé et brûlé en augmentant la température, pour évaporer l'eau contenue à l'intérieur et faire mousser le granulat, **caractérisé en ce qu'**au moins une fraction de quelques-uns des minéraux argileux naturels de mousse d'argile appartenant au groupe des phyllosilicates et des tectosilicates utilisée pour produire les particules de granulat est modifiée de façon organique et aminée, cette fraction étant ensuite prémélangée et extrudée le cas échéant conjointement avec les matières argileuses.

11. Procédé selon la revendication 10, **caractérisé en ce que** la modification organique des minéraux argileux s'effectue en introduisant des ions d'alkylammonium d'amines organiques, les ions d'alkylammonium provenant notamment :
- d'amines primaires ou secondaires organiques ; et/ou
- d'amines organiques avec entre 1 et 10 atomes de carbone.

12. Procédé selon la revendication 10 ou 11, **caractérisé en ce que** les phyllosilicates et/ou les tectosilicates appartenant au groupe contenant la stéatite (Mg₃Si₄O₁₀(OH)₂), la muscovite (KAl₂[(OH,F)₂|AlSi₃O₁₀]), la kaolinite (Al₄[(OH)₈|Si₄O₁₀]), la montmorillonite (Al_{1,67}Mg_{0,33}) [(OH)₂|Si₄O₁₀]) et les silicates de potassium-aluminium, tels que K₆(Si₃₀Al₆) * 20 H₂O, sont modifiés de façon organique et aminés, notamment au moins une fraction de quelques-uns de ces minéraux argileux naturels appartenant au groupe des phyllosilicates et des tectosilicates utilisée pour produire des particules de granulat en mousse d'argile étant réduite à la taille de nanoparticules, après quoi cette fraction est le cas échéant prémélangée et extrudée conjointement avec les matières argileuses.

13. Procédé selon l'une quelconque des revendications 10 à 12, **caractérisé en ce que** des additifs appartenant au groupe des hydrates salins, notamment au groupe des carbonates, sont ajoutés aux minéraux argileux naturels utilisés pour produire des particules de granulat en mousse d'argile.

14. Procédé selon l'une quelconque des revendications 10 à 13, **caractérisé en ce que** pour produire en outre des particules à partir d'un produit de polycondensation expansé, on polycondense au moins un alcool phénylpropanoïde ou au moins un polyhydroxyphénol polycondensé en présence d'au moins un agent porogène, l'agent porogène étant activé, après quoi le produit de polycondensation est séché et granulé, notamment :
- au moins un alcool phénylpropanoïde étant utilisé pour produire le produit de polycondensation, cet alcool contenant des unités phénylpropanoïdes contenant de la lignine ou étant entièrement formé à partir de celle-ci, ces unités contenant comme substituts du cycle benzénique, outre une chaîne propanique, notamment au moins un groupe fonctionnel appartenant au groupe contenant le groupe hydroxyle, le groupe méthoxyle, le groupe alkoxyle et le groupe aryloxyle ;
- l'alcool phénylpropanoïde étant copolycondensé avec de la lignine pour produire le produit de polycondensation expansé ; et/ou
- au moins un tanin étant utilisé pour produire le produit de polycondensation.

15. Procédé selon l'une quelconque des revendications 10 à 14, **caractérisé en ce que** pour produire une matrice à pores ouverts à partir du produit de polycondensation expansé avec des particules de mousse d'argile logées à l'intérieur, les particules de mousse d'argile sont préfabriquées et ajoutées à l'au moins un alcool phénylpropanoïde ou à l'au moins un polyhydroxyphénol polycondensé avant sa polycondensation.

16. Procédé selon l'une quelconque des revendications 10 à 15, **caractérisé en ce que** des substances actives, appartenant notamment au groupe des engrais, des moyens phytosanitaires et des tampons, sont amenées dans les pores du granulat de sol, notamment en plongeant le granulat de sol dans une solution de substance active puis en le faisant sécher.
